# EUROPÄISCHE PATENTSCHRIFT

(11) **EP 2 787 089 B1**
(45) Veröffentlichungstag und Bekanntmachung des Hinweises auf die Patenterteilung: **31.10.2018**
(21) Anmeldenummer: 13162266.4
(22) Anmeldetag: 04.04.2013
(51) Int. Cl.: C21D 7/04, B23P 6/00, B23P 9/02, B23P 9/04, C21D 7/13, C21D 9/00, F01D 5/28

(54) **Vorrichtung und Verfahren zur Behandlung von Bauteilen**
Method and device for processing components
Dispositif et procédé destinés au traitement de composants

(43) Veröffentlichungstag der Anmeldung: 08.10.2014
(73) Patentinhaber: MTU Aero Engines AG, 80995 München (DE)
(72) Erfinder: Bamberg, Joachim, 85221 Dachau (DE); Hessert, Roland, 82211 Herrsching (DE)

(56) Entgegenhaltungen:
- EP-A1- 1 559 796
- WO-A1-2012/152259
- DE-A1-102009 018 988
- DE-A1-102009 023 060
- JP-A- 2004 169 104
- SU-A1- 1 507 811

## Beschreibung

Die vorliegende Erfindung betrifft ein Verfahren zur Behandlung, insbesondere Randschichtverfestigung, von Bauteilen, insbesondere Turbomaschinenbauteilen, eine Vorrichtung zur Durchführung eines solchen Verfahrens sowie ein Bauteil, das mittels eines solchen Verfahrens behandelt worden ist.

Insbesondere Gasturbinenbauteile, etwa von Flugtriebwerken, unterliegen im Betrieb hohen Belastungen, die zu einem Verschleiß und einem Versagen der Bauteile führen können. Da zum Beispiel Flugtriebwerke höchsten Anforderungen im Hinblick auf Zuverlässigkeit, Gewicht, Leistung, Wirtschaftlichkeit und Lebensdauer genügen müssen, sollen alle Optimierungspotentiale ausgenutzt werden. Hierzu gehört auch eine optimierte Ausnutzung der Potentiale von Werkstoffen, aus welchen die Bauteile hergestellt sind. Dabei kommt insbesondere den Randschichten der Bauteile eine besondere Bedeutung zu, da die Randschichten im Betrieb einer maximalen Beanspruchung ausgesetzt sind. So bilden Randschichten oft den Ausgangsort beim Versagen eines Bauteils.

Daher ist es aus dem Stand der Technik bereits bekannt, Bauteile an ihren Randschichten zu verfestigen. Durch diese Verfestigung kann insbesondere die Lebensdauer der Bauteile verlängert werden. Nach betriebsinterner Praxis wird die Randschichtverfestigung vorzugsweise durch Kugelstrahlen oder Festwalzen vorgenommen.

Aus der WO 2012/152259 A1 ist ein Verfahren zum Herstellen, Reparieren oder Austauschen eines Bauteils bekannt, bei dem ein ausgewählter Bereich des Bauteils mittels Druckbeaufschlagung verfestigt wird.

Aus der EP 1 559 796 A1 ist ein Verfahren zur Härtesteigerung hitzebeanspruchter Bauteilbereiche bekannt, welches u.a. Ultraschallbeaufschlagung vorsieht.

Aus der DE 10 2009 018 988 A1 ist ein Verfahren zur Oberflächenverfestigung komplexer dünnwandiger Bauteile bekannt, bei dem ein Ultraschallschwinger zur Verfestigung eingesetzt wird.

Aus der DE 10 2009 023 060 A1 ist ein Verfahren und eine Vorrichtung zum Oberflächenverfestigen eines Bauteils mittels einer Kraft bekannt, welches zumindest im Bereich seiner zu verfestigenden Oberfläche aus einer intermetallischen Verbindung besteht.Aus der WO 2006/058518 A1 der Anmelderin ist es bekannt, Bauteile mit Ultraschall zu beaufschlagen, um eine Randschichtverfestigung zu erreichen. Dabei kann zwischen einem sonotrodenartigen Werkzeug und dem Bauteil eine elektrische Spannung angelegt werden, um das Bauteil im Kontaktbereich zu erwärmen und so die Verfestigungswirkung zu optimieren.

Aufgabe der vorliegenden Erfindung ist es, eine Maschine, insbesondere eine Turbomaschine, vorzugsweise eine Gasturbine und insbesondere eine Flugtriebwerk-Gasturbine mit verbesserten Eigenschaften, insbesondere größerer Lebensdauer, längeren Wartungsintervallen, höherer Zuverlässigkeit und/oder höheren Leistungsdaten zur Verfügung zu stellen.

Zur Lösung dieser Aufgabe wird erfindungsgemäß vorgeschlagen, ein oder mehrere Bauteile einer solchen Maschine nach einem Verfahren mit den Merkmalen des Anspruchs 1 zu behandeln. Anspruch 6 stellt eine Vorrichtung zur Durchführung eines solchen Verfahrens unter Schutz. Die Unteransprüche betreffen vorteilhafte Weiterbildungen.

Durch eine erfindungsgemäße Behandlung kann vorteilhafterweise eine Verbesserung der Oberflächenfestigkeit und/oder -härte eines Bauteils erreicht werden, was dessen Belastbarkeit, Lebensdauer und Zuverlässigkeit erhöhen kann.

Erfindungsgemäß wird das Bauteil mit Ultraschall beaufschlagt. Dies geschieht in einer bevorzugten Ausführung durch ein Werkzeug zur Beaufschlagung des Bauteils mit Ultraschall, welches insbesondere eine Sonotrode umfassen oder sein kann. Unter einer Sonotrode im Sinne der vorliegenden Erfindung wird insbesondere ein Werkzeug verstanden, das durch das Einleiten von, vorzugsweise hochfrequenten, mechanischen Schwingungen im Ultraschallbereich in Resonanzschwingungen versetzt werden und eine Verbindung von einem Ultraschallgenerator, der vorzugsweise einen Piezoaktuator aufweist, zum Bauteil herstellt. Die Sonotrode kann in Schwingungsrichtung oder auch hierzu geneigt auf das zu behandelnde Bauteil aufgesetzt werden. Sie ist vorzugsweise wenigstens teilweise aus Aluminium, Titan und/oder Stahl, insbesondere Wolframkarbid, hergestellt.

Vor, während und/oder nach der Beaufschlagung mit Ultraschall wird das Bauteil erfindungsgemäß intermittierend erwärmt. Unter einer intermittierenden Erwärmung wird insbesondere die zeitlich variierende, insbesondere unterbrochene, mehrfache bzw. wiederholte Zuführung von Energie zu dem Bauteil, die das Bauteil erwärmt, verstanden. Die Zeitdauern, in denen Energie zugeführt wird, und/oder die Pausen dazwischen, in denen weniger, insbesondere keine Energie zugeführt wird, können jeweils gleich oder unterschiedlich lang sein. Insbesondere können Zuführ- und Pausendauern gleich sein. Bei gleichlangen Zuführ- und/oder Pausendauern definiert die Zeitdauer zwischen zwei aufeinanderfolgenden Energiezuführungen bzw. Pausen eine Periode der dann periodisch intermittierenden Erwärmung. Sowohl solche periodischen als auch aperiodische, insbesondere zeitlich stochastische Erwärmungen können kurze Zeitdauern, in denen Energie zugeführt wird, und/oder kurze Pausen aufweisen, wobei Zuführ- und/oder Pausendauern vorzugsweise weniger als 10 s, bevorzugt weniger als 1 s und insbesondere weniger als 100 ms betragen. Insbesondere solche Erwärmungen mit kurzen Zuführ- und/oder Pausendauern werden als gepulste Erwärmungen im Sinne der vorliegenden Erfindung bezeichnet. Als gepulste Erwärmung wird insbesondere auch eine Erwärmung mit pulsartigen Energieeinträgen bezeichnet. In einer bevorzugten Ausführung wird das Bauteil durch die intermittierende Erwärmung im Mittel oder maximal auf wenigstens 400°C, insbesondere wenigstens 500°C und vorzugsweise wenigstens 550°C und/oder auf höchstens 800°C, insbesondere höchstens 700°C und vorzugsweise höchstens 650°C erwärmt.

Durch die Kombination der Ultraschallbeaufschlagung mit einer intermittierenden, insbesondere periodischen, vorzugsweise pulsartigen Erwärmung kann eine vorteilhafte Beeinflussung, insbesondere Verfestigung, von Bauteilen, insbesondere deren Randschichten, gegenüber aus dem Stand der Technik bekannten Behandlungen erreicht werden.

In einer bevorzugten Ausführung erfolgen die Erwärmung und die Ultraschallbeaufschlagung zeitlich synchronisiert. Hierunter wird insbesondere verstanden, dass der Anfang, die Dauer und/oder das Ende einer Ultraschallbeaufschlagung und der Anfang, die Dauer bzw. das Ende einer Erwärmung in einem vorgegebenen Verhältnis stehen, insbesondere identisch sind. So kann insbesondere eine Erwärmung stets zeitgleich mit einer Ultraschallbeaufschlagung oder in deren Pausen erfolgen. Zusätzlich oder alternativ kann beispielsweise auch eine Periode einer, vorzugsweise gepulsten, Erwärmung in einem vorgegebenen Verhältnis zu einer Ultraschallfrequenz der Ultraschallbeaufschlagung stehen. Unter einer Synchronisation im Sinne der vorliegenden Erfindung wird daher vorliegend insbesondere eine zeitliche und/oder Frequenzabstimmung bzw. vorgegebene Zuordnung zwischen Erwärmung und Ultraschallbeaufschlagung verstanden. In einer bevorzugten Weiterbildung ist diese Zuordnung veränderbar, um die Behandlung beispielsweise an unterschiedliche Bauteilgeometrien, -materialien und/oder gewünschte Eigenschaften, beispielsweise Bearbeitungstiefen, anzupassen.

Vorzugsweise wird das Bauteil lokal im Bereich der Ultraschallbeaufschlagung erwärmt. Insbesondere kann es in einem Kontaktbereich einer Sonotrode und/oder in einem vorgegebenen, vorzugsweise veränderbaren, Bereich vor und/oder nach diesem Kontaktbereich, gesehen in Bearbeitungsrichtung der Sonotrode relativ zum Werkstück, erwärmt werden. Ein der Sonotrode vorauseilender bzw. nachfolgender Erwärmungsbereich kann den Zustand des Bauteilmaterials für die Ultraschallbearbeitung bzw. an diese anschließend beeinflussen.

In einer bevorzugten Ausführung wird das Bauteil berührungslos erwärmt. Dies kann insbesondere durch elektromagnetische Strahlung erfolgen, mit der das Bauteil beaufschlagt wird. Hierbei kann es sich insbesondere um Licht im sichtbaren und/oder unsichtbaren Bereich handeln, was vorliegend als optische Strahlung bezeichnet wird, vorzugsweise um kohärentes Licht, welches von einem Laser ausgestrahlt wird. Durch gepulste Laser und/oder eine entsprechende optische Umlenk- bzw. Blendeneinrichtung kann vorteilhaft eine gepulste Erwärmung bzw. ein gepulster Energieeintrag erfolgen. Zusätzlich oder alternativ kann es sich bei der elektromagnetischen Strahlung auch um Wärmestrahlung handeln.

Gleichermaßen kann das Bauteil durch Kontakt erwärmt werden. Dies kann insbesondere durch Beaufschlagung des Bauteils mit elektrischem Strom erfolgen. In einer bevorzugten Weiterbildung wird der Strom über die Sonotrode in das Bauteil eingeleitet. Auch hier kann durch eine Steuerung, die vorzugsweise einen elektronischen Schalter, insbesondere mit wenigstens einem Thyristor, aufweist, vorteilhaft eine gepulste Erwärmung bzw. ein gepulster Energieeintrag erfolgen. Zusätzlich oder alternativ kann das Bauteil durch Reibung erwärmt werden. Hierzu ist in einer bevorzugten Weiterbildung vorgesehen, dass eine Anpresskraft, mit der eine Sonotrode auf das Bauteil vorgespannt wird, intermittierend erhöht wird. Die Reibkraft, die mit der Anpresskraft steigt, bewirkt so dissipativ eine intermittierende Erwärmung des Bauteils.

In einer bevorzugten Ausführung werden das Bauteil und eine Sonotrode zur Beaufschlagung des Bauteils mit Ultraschall während der Beaufschlagung relativ zueinander bewegt. Hierzu kann gleichermaßen die Sonotrode gegenüber einem ortsfesten Bauteil bewegt werden, das Bauteil gegenüber einer ortsfesten Sonotrode, oder sowohl Sonotrode als auch Bauteil. Diese Bewegung(en) von Sonotrode und/oder Bauteil erfolgen in einer bevorzugten Weiterbildung robotergeführt. In einer bevorzugten Weiterbildung wird auch das Mittel zur intermittierenden Erwärmung des Bauteils, vorzugsweise örtlich synchronisiert zu der Sonotrode, und das Bauteil relativ zueinander bewegt. Insbesondere kann das Mittel zur intermittierenden Erwärmung des Bauteils eigenständig, vorzugsweise robotergeführt und/oder durch Umlenkung einer elektromagnetischen Strahlung, etwa durch ein optisches Spiegelsystem oder dergleichen, bewegt werden und auf diese Weise einem Kontaktbereich einer Sonotrode vorauseilen bzw. nachfolgen.

Vorzugsweise wird das Bauteil in situ, d.h. in einem in eine Maschine, insbesondere Turbomaschine, eingebauten Zustand erwärmt und mit Ultraschall beaufschlagt.

In einer bevorzugten Ausführung ist eine gemeinsame Steuereinrichtung zur Steuerung der Sonotrode und des Mittels zur Erwärmung des Bauteils vorgesehen. Dies kann die zeitliche und/oder örtliche Synchronisierung vereinfachen und/oder präzisieren.

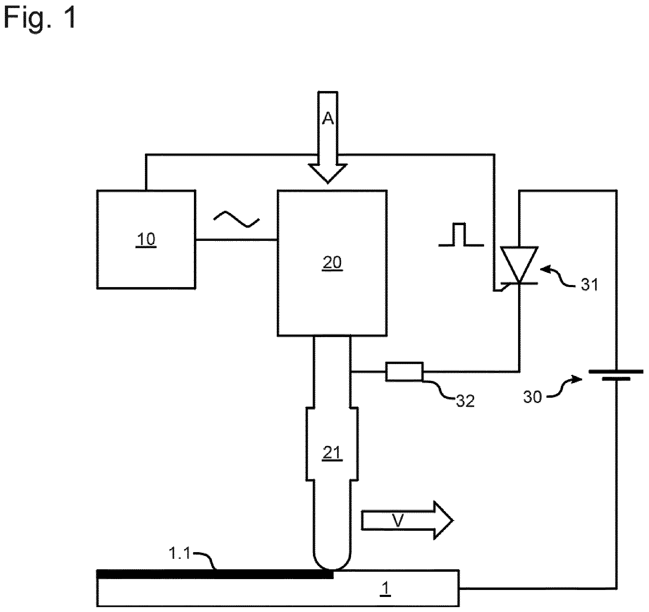

Weitere Merkmale und Vorteile ergeben sich aus den Unteransprüchen und dem Ausführungsbeispiel. Hierzu zeigt, teilweise schematisiert, die einzige
Fig. 1: ein Bauteil in einer Vorrichtung zur Durchführung eines Verfahrens nach einer Ausführung der vorliegenden Erfindung.

Fig. 1 zeigt ein Bauteil 1, beispielsweise eine Schaufel einer Turbinen- oder Verdichterstufe einer Gasturbine, und eine Vorrichtung zur Randschichtenverfestigung dieses Bauteils nach einer Ausführung der vorliegenden Erfindung. In Fig. 1 ist eine bereits verfestigte Randschicht 1.1 des Bauteils 1 dunkel gekennzeichnet.

Die Vorrichtung umfasst zum Einen eine das Bauteil 1 kontaktierende Sonotrode 21, die durch einen Ultraschallgenerator 20 mit einem Piezoaktuator angeregt wird, welcher von einer Steuereinrichtung 10 angesteuert wird. Die Sonotrode 21 wird mit einer Anpresskraft A gegen das Bauteil 1 vorgespannt und beaufschlagt dieses mit Ultraschall, wodurch sich dessen Gefüge in der Randschicht 1.1 mechanisch verfestigt.

Die Vorrichtung umfasst weiter ein Mittel zur intermittierenden Erwärmung des Bauteils 1. Im Ausführungsbeispiel umfasst dieses Mittel eine Spannungsquelle 30, einen elektronischen Schalter in Form eines Thyristors 31, und einen Vorwiderstand 32. Die Steuereinrichtung 10 schaltet den Thyristor 31, wie in Fig. 1 durch das Steuersignal angedeutet, pulsförmig, so dass über die Sonotrode 21 das Bauteil 1 im Kontaktbereich der Sonotrode 21 pulsförmig mit Strom beaufschlagt wird, der das Bauteil 1 durchfliest und insbesondere den Kontaktbereich intermittierend erwärmt, wodurch sich das Gefüge des Bauteils 1 in dessen Randschicht 1.1 thermisch verfestigt. Zudem verbessert sich die oben erläuterte mechanische Verfestigung, da sie in einem thermischen, erwärmten Zustand des Materials erfolgt.

Sonotrode 21 und Bauteil 1 werden relativ zueinander bewegt, wie durch den Vorschub V in Fig. 1 angedeutet. Dies kann insbesondere durch eine Roboterführung (nicht dargestellt) der Sonotrode 21 erfolgen, wodurch zugleich der Bereich des Energieeintrags zur intermittierenden Erwärmung mitbewegt wird.

In einer nicht dargestellten Abwandlung steuert die Steuerung 10 anstelle des elektronischen Schalters 31 einen gepulsten Laser, insbesondere eine Umlenkoptik, und führt so einen Auftreffbereich des Lasers auf dem Werkstück mit dem Kontaktbereich der Sonotrode 21 mit bzw. in Bearbeitungsrichtung V vor dieser her.

### Bezugszeichenliste

- 1: Bauteil
- 1.1: behandelte (verfestigte) Randschicht
- 10: Steuerung
- 20: Ultraschallgenerator
- 21: Sonotrode
- 30: Spannungsquelle
- 31: Thyristor (elektronsicher Schalter)
- 32: Vorwiderstand
- A: Anpresskraft
- V: Vorschub

## Patentansprüche

1. Verfahren zur Randschichtverfestigung von Bauteilen (1), insbesondere Turbomaschinenbauteilen, wobei das Bauteil erwärmt und mit Ultraschall beaufschlagt wird, **dadurch gekennzeichnet, dass**
- das Bauteil (1) gepulst erwärmt wird,
- die Erwärmung und die Ultraschallbeaufschlagung zeitlich synchronisiert erfolgen und
- das Bauteil (1) und eine mindestens teilweise aus Wolframcarbid hergestellte Sonotrode (21) zur Beaufschlagung des Bauteils (1) mit Ultraschall während der Beaufschlagung relativ zueinander bewegt werden.

2. Verfahren nach Anspruch 1, **dadurch gekennzeichnet, dass** das Bauteil lokal im Bereich der Ultraschallbeaufschlagung erwärmt wird.

3. Verfahren nach Anspruch 1 oder 2, **dadurch gekennzeichnet, dass** das Bauteil berührungslos oder durch Kontakt erwärmt wird.

4. Verfahren nach Anspruch 3, **dadurch gekennzeichnet, dass** das Bauteil durch elektromagnetische, insbesondere optische, Strahlung, insbesondere mittels eines Lasers, und/oder durch elektrischen Strom erwärmt wird.

5. Verfahren nach einem der vorhergehenden Ansprüche, **dadurch gekennzeichnet, dass** das Bauteil in situ erwärmt und mit Ultraschall beaufschlagt wird.

6. Vorrichtung (10, 20, 21, 30, 31, 32) zur Randschichtverfestigung von Bauteilen (1), insbesondere Turbomaschinenbauteilen, mit
- einer Sonotrode (21), zur Beaufschlagung des Bauteils mit Ultraschall und
- einem Mittel (30, 31, 32) zur gepulsten Erwärmung des Bauteils,
wobei die Vorrichtung zur Durchführung eines Verfahrens nach einem der vorhergehenden Ansprüche eingerichtet ist.

7. Vorrichtung nach Anspruch 6, **dadurch gekennzeichnet, dass** das Mittel zur Erwärmung des Bauteils eine elektrische Spannungsquelle (30) und/oder einen Laser aufweist.

8. Vorrichtung nach einem der vorhergehenden Ansprüche 6 bis 7, **gekennzeichnet durch** eine gemeinsame Steuereinrichtung (10), die zur Steuerung des Werkzeugs zur Beaufschlagung des Bauteils (1) mit Ultraschall und des Mittels zur Erwärmung des Bauteils eingerichtet ist.

## Claims

1. Method for hardening the surface layer of components (1), in particular turbomachine components, the component being heated and subjected to ultrasound, **characterized in that**
- the component (1) is heated in a pulsed manner,
- the heating and subjection to ultrasound are carried out in a time-synchronized manner and
- the component (1) and a sonotrode (21), made at least in part of tungsten carbide, for subjecting the component (1) to ultrasound are moved relative to one another during subjection.

2. Method according to claim 1, **characterized in that** the component is locally heated in the region of subjection to ultrasound.

3. Method according to either claim 1 or claim 2, **characterized in that** the component is heated contactlessly or by contact.

4. Method according to claim 3, **characterized in that** the component is heated by electromagnetic, in particular optical, radiation, in particular by means of a laser, and/or by an electric current.

5. Method according to any of the preceding claims, **characterized in that** the component is heated and subjected to ultrasound *in situ.*

6. Device (10, 20, 21, 30, 31, 32) for hardening the surface layer of components (1), in particular turbomachine components, comprising
- a sonotrode (21) for subjecting the component to ultrasound and
- a means (30, 31, 32) for heating the component in a pulsed manner,
wherein the device is configured to carry out a method according to any of the preceding claims.

7. Device according to claim 6, **characterized in that** the means for heating the component comprises an electric voltage source (30) and/or a laser.

8. Device according to any of the preceding claims 6 to 7, **characterized by** a common control apparatus (10) which is configured to control the tool for subjecting the component (1) to ultrasound and the means for heating the component.

## Revendications

1. Procédé de consolidation de couches de bord de composants (1), en particulier de composants de turbomachines, le composant étant chauffé et exposé à des ultrasons, **caractérisé en ce que**
- le composant (1) est chauffé de façon puisée,
- le chauffage et l'exposition aux ultrasons s'effectuent de façon synchronisée dans le temps et
- le composant (1) et une sonotrode (21), réalisée au moins partiellement en carbure de tungstène destinée à exposer le composant (1) aux ultrasons, sont déplacés l'un par rapport à l'autre pendant l'exposition.

2. Procédé selon la revendication 1, **caractérisé en ce que** le composant est chauffé localement dans la zone de l'exposition aux ultrasons.

3. Procédé selon la revendication 1 ou 2, **caractérisé en ce que** le composant est chauffé sans contact ou par contact.

4. Procédé selon la revendication 3, **caractérisé en ce que** le composant est chauffé par rayonnement électromagnétique, en particulier optique, en particulier au moyen d'un laser, et/ou par un courant électrique.

5. Procédé selon l'une des revendications précédentes, **caractérisé en ce que** le composant est chauffé in situ et exposé aux ultrasons.

6. Dispositif (10, 20, 21, 30, 31, 32) de solidification de couches de bord de composants (1), en particulier de composants de turbomachine, avec
- une sonotrode (21) destinée à exposer le composant aux ultrasons et
- un moyen (30, 31, 32) destiné au chauffage pulsé du composant,
le dispositif étant agencé pour la réalisation d'un procédé selon l'une des revendications précédentes.

7. Dispositif selon la revendication 6, **caractérisé en ce que** le moyen destiné à chauffer le composant comporte une source de tension (30) électrique et/ou un laser.

8. Dispositif selon l'une des revendications précédentes 6 à 7, **caractérisé par** un équipement de commande (10) commun
qui est agencé pour la commande de l'outil destiné à exposer le composant (1) aux ultrasons et du moyen destiné au chauffage du composant.
